# EUROPEAN PATENT SPECIFICATION

(11) **EP 0 415 499 B1**
(45) Date of publication and mention of the grant of the patent: **29.12.1993**
(21) Application number: 90202289.6
(22) Date of filing: 27.08.1990
(51) Int. Cl.: B62H 5/14, B62K 19/30

(54) **Bicycle ring lock**
Ringschloss für Fahrrad
Etrier antivol pour bicyclette

(30) Priority: 28.08.1989 NL 8902172
(43) Date of publication of application: 06.03.1991
(73) Proprietor: Batavus B.V., NL-8444 AR Heerenveen (NL)
(72) Inventor: Oskam, Willem, NL-8446 MZ Heerenveen (NL)
(74) Representative: Smulders, Theodorus A.H.J., Ir.

(56) References cited:
- DE-U- 8 205 289
- DE-U- 8 716 271
- NL-A- 7 701 027

## Description

The invention relates to a bicycle ring lock comprising a ring-segment shaped bolt and a housing comprising portions extending on opposite sides of an interspacefor encasing the bolt, the housing mounting a catch for blocking the bolt and means for operating the catch by means of a key.

Such a bicycle ring lock is known from NL-A-7701027 and is mounted against a bicycle's rear fork in such a way that the two encasing portions project downwardly beyond the rim on opposite sides of the rim of the bicycle's rear wheel. By means of a grip the ring-segment shaped bolt can be displaced in circumferential relation between a position where the bolt is entirely within the housing and a position where a portion of the bolt projects from one encasing portion into the other encasing portion. In both positions the bolt can be locked by means of the catch.

A drawback of such known locks is that it is relatively easy to force and remove by removing the lock from the fork, rotating the lock about the rim of the wheel to facilitate access to the bolt for a pair of nippers or a grinding wheel, and cutting or slitting the bolt. Thus the bicycle may have its lock removed without showing any traces of breaking, after which it can be provided with a new lock at relatively low cost.

The invention aims to provide a bicycle lock which does not have the above mentioned disadvantageous properties.

To accomplish this object the invention provides a lock as described hereinabove, in which the housing comprises a central housing part and outer housing parts U-shaped in cross-section with the open sides turned towards each other, the catch and the means for operating the catch by means of a key being mounted in the central housing part, the outer housing parts each forming a leg of a bicycle's rear fork and the central housing part being locked between the outer housing parts.

Owing to the fact that the lock according to the invention is integrated into the rear fork it is not possible to reach the bolt of the lock with a grinding wheel from the side of the bicycle and disassembling the lock requires disassembling the rear wheel, the mud guard, the carrier, and the rear fork. When the lock has been broken, it must be replaced by a new lock-and-rear fork assembly or by an alternative, conventional rear fork with a lock, which is inefficient and relatively expensive.

The integration of lock and rear fork eliminates any problems regarding the connection of the lock to the rear fork.

A further advantage of the lock according to the invention is that the appearance of the bicycle is not marred by a separate lock mounted against the rear fork.

The close connection between the lock according to the invention and the bicycle creates the possibility of preventing a form of fraud where a bicycle is reported stolen and then the sum insured is collected in exchange for the bicycle keys. To that end the means for operating the catch by means of a key may be adapted to be operated by means of a key, duplicates of which are made using data recorded on an identification object. Obtaining duplicate keys without registration is thus rendered substantially more difficult, while at the same time the removal of the lock leads to damage to the bicycle and is inefficient. The availability of replacement locks may also be controlled by a system of registration.

The invention can further be embodied in a rear fork of a bicycle, comprising two legs and in which the outer housing parts of a bicycle lock according to the invention are incorporated. According to the invention, each leg of this bicycle fork comprises a U-shaped, outward bent portion, open sides of said portions facing each other, said portions being disposed opposite each other, enclosing sections of a common ring form with a substantially uniform clearance and forming outer housing parts for a bicycle lock according to the invention.

The invention will now be further illustrated and explained with reference to one embodiment as shown in the accompanying drawings, in which:

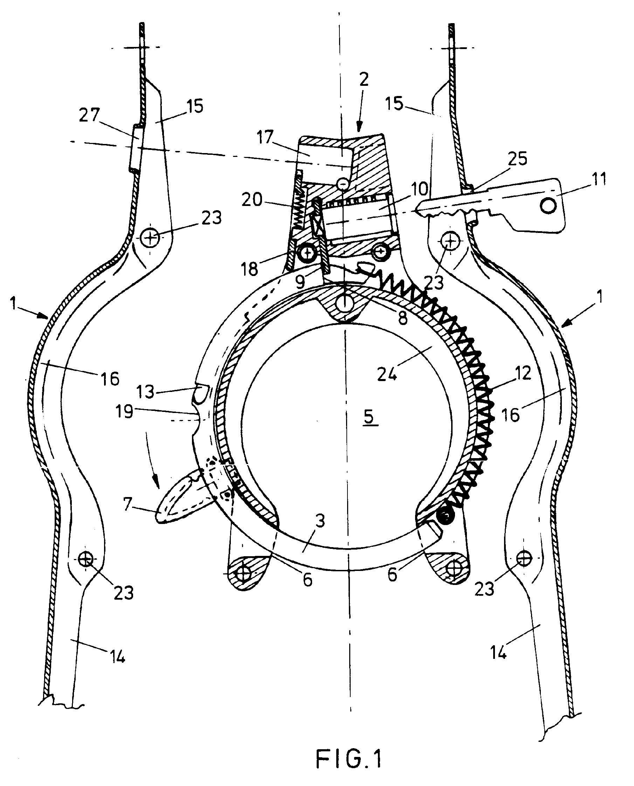

Fig. 1 is a sectional view of a lock according to the invention in closed position, with the outer housing parts being shown in exploded view;

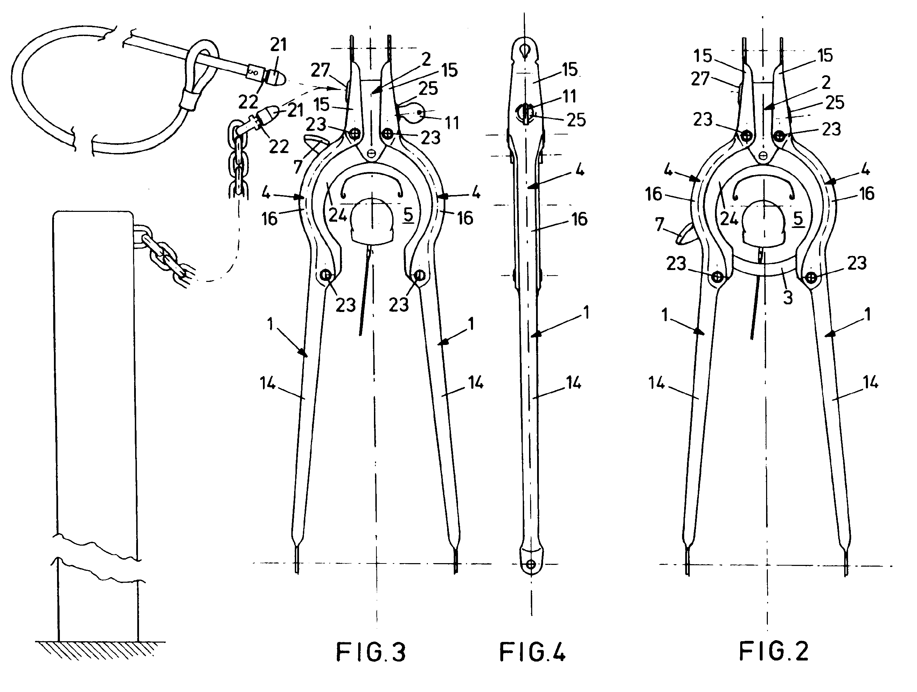

Fig. 2 is a rear view of a lock according to Fig. 1, also showing a schematic cross-section of a mud guard and a part of a wheel;
Fig. 3 is a rear view according to Fig. 2, showing the lock in opened position and also showing means for tying up a bicycle; and
Fig. 4 is a side view of a lock according to Fig. 1.

The lock according to the embodiment shown comprises a housing with outer housing parts 1 and a central housing part 2. Suspended in the housing is a ring-segment shaped bolt 3 arranged around the centre of that ring, for displacement between two positions. The bolt is enclosed by two encasing portions 4 extending on opposite sides of an interspace 5 and having their free ends provided with passages 6 for bolt 3. In one, closed position a part of the bolt 3 extends from the passage 6 of the one encasing portion 4 to the oppositely disposed passage 6 of the other encasing portion 4. To operate bolt 3 it is provided with a grip 7 extending from the bolt through a slot in the housing (not shown in the drawing).

The bolt 3 is further provided with a stop surface 8 which is in engagement with catch 9 when the bolt 3 is in the closed position. The catch 9 can be operated by turning a lock cylinder 10 by means of a key 11. The catch 9 and the lock cylinder 10 are suspended in the central housing part 2.

When the catch 9 is removed from the path of the bolt 3, the bolt 3 is pulled into the opened position by means of a spring 12. In the opened position the bolt 3 is withdrawn in the housing, leaving the space between the passages 6 clear. A protection stop surface 13 acting in a direction of rotation opposite to the stop surface 8 prevents the possibility of the lock being closed without operating the catch 9 by means of a key 11.

The outer housing parts 1 form at the same time legs of a rear fork of a bicycle, to which end they are provided with extensions 14 and 15. At the ends of the extensions openings 16 are provided for means of attachment for the lock to be secured to other members of a frame.

At the location where the central housing part 2 is arranged between the outer housing parts 1, the outer housing parts 1 are U-shaped in cross-section, with the open sides of the U-shaped portions being turned towards each other and the central housing part 2 being locked between the outer housing parts 1.

The lock cannot be rotated relatively to the rear fork to facilitate access to the bolt with for instance a grinding wheel, for instance. The fact that when the lock is broken a considerable part of the bicycle is damaged and must be replaced before the bicycle is sold, which is inefficient to say the least, makes it relatively unattractive to steal a bicycle provided with a lock according to the invention. Further, the fact that the bicycle is provided with a lock that is largely integrated into the rear fork instead of being separately mounted on the rear fork, improves the appearance of the bicycle.

The central housing part 2 is mounted between outwardly bent portions 16 of the outer housing parts 1 so that it cannot be displaced in the longitudinal direction of outer housing parts 1 when they are connected to each other at a fixed distance.

The outwardly bent portions 16 are shaped in such a way that they partly enclose the ring defined by the bolt 3 with a substantially constant clearance. Thus they closely connect to the path of the bolt 3, which yields an encasing of minimal size.

The central housing part 2 is provided with a hole 17 whose opening at the free end can be reduced by means of a locking slide 18, with the bolt 3 in closed position locking the slide 18 in a position where it reduces the free opening. The bolt 3 is provided with a recess 19 which faces the slide 18 when the bolt 3 is in the opened position, so that the slide 18 can move in the direction of the bolt 3 so as to clear the free opening of the hole 17. When the bolt 3 is in the closed position, the displacement of the slide 18 towards the bolt 3 is prevented in that the slide abuts the outer side of the bolt 3. A spring 20 continuously presses the slide into the position where it reduces the free opening.

The opening 17 can receive a plug 21 to which a cable or a chain can be connected for tying the bicycle to a tree, for instance. The plug 21 is provided with a narrowed portion 22 which together with the spring action of the slide 18 is capable of arresting the plug 21 in the opening 17 when the bolt 3 is in the opened position. Thus, when the grip 7 of the bolt 3 is operated for closing the lock, the plug 21 does not have to be retained. Once the bolt 3 has been brought into the closed position, the slide 18, engaging the narrowing of the plug 21, prevents the plug 21 from being withdrawn from the hole 17.

The central housing part 2 is connected to the outer housing parts by means of rivets 23, which makes it virtually impossible to replace it without leaving traces of breaking.

The central housing part 2 further comprises a portion with a rib 24 extending inwardly, said portion extending along the inner side of the bolt 3 and forming a part of the encasing of the bolt 3. This rib 24 provides a strengthening of the central housing part 2, which makes it more difficult to bend apart the central housing part 2 and an outer housing part 1. Further the rib 24 forms an additional support strengthening the bent portion 16 and rendering it more difficult to gain access to the bolt 3 with any tools.

Provided in the portion that is U-shaped in cross-section is a passage 25 for a key 11. Thus the lock can be operated at a location that is easily accessible and the lock cylinder 10 is protected along its circumferential edge.

Provided further in the portion that is U-shaped in cross-section is a passage 27 for a plug 21. Thus, also the location for introducing the plug 21 is readily accessible and the slide 18 can simply be kept locked between outer housing parts 1 and the central housing part 2.

## Claims

1. A bicycle ring lock comprising a ring-segment shaped bolt (3) and a housing comprising portions (1) extending on opposite sides of an interspace for encasing the bolt (3), the housing mounting a catch (9) for blocking the bolt (3) and means (10) for operating the catch (9) by means of a key (11), characterized in that the housing comprises a central housing part (2) and outer housing parts (1) U-shaped in cross-section with the open sides turned towards each other, said catch (9) and said means (10) for operating the catch (9) by means of a key (11) being mounted in the central housing part (2), the outer housing parts (1) each forming a leg of a bicycle's rear fork and the central housing part (2) being locked between the outer housing parts (1).

2. A bicycle lock according to claim 1, characterized in that the outer housing parts (1) each comprise a portion (16) bent outwards away from the oppositely disposed outer housing part (1), said outwardly bent portions (16) being disposed opposite to each other and forming a widening of the space between the two outer housing parts (1), in which the central housing part (2) is locked.

3. A bicycle lock according to claim 2, characterized in that the outwardly bent portions (16) are formed in such a way that they partly enclose the ring form defined by the bolt (9) with a substantially constant clearance.

4. A bicycle lock according to any one of the preceding claims, characterized in that the central housing part (2) is provided with a hole (17) whose free opening can be reduced by means of a locking slide (18), the bolt (9) in the closed position locking the slide (18) in a position where it reduces the free opening.

5. A bicycle lock according to claim 4, characterized in that the locking slide (18) in unlocked position can be displaced into a recess (19) in the bolt (9) and is retained in a position where it reduces the free opening by a spring force.

6. A bicycle lock according to any one of the preceding claims, characterized in that the central housing part (2) is connected to the outer housing parts (1) by means of rivets (23).

7. A bicycle lock according to any one of the preceding claims, characterized in that the central housing part (2) comprises a portion with a rib (24) extending inwardly, said portion extending along the inner side of the bolt (9) and forming a part of the encasing of the bolt (9).

8. A bicycle lock according to any one of the preceding claims, characterized in that in the outer side of one of the outer housing parts (1) a passage (25) is provided behind which the means (10) for operating the catch (9) by means of a key (11) are arranged.

9. A bicycle lock according to any one of the preceding claims, characterized in that in the outer side of one of the outer housing parts (1) a passage (27) is provided behind which the hole (17) is provided whose free opening can be reduced by means of a locking slider (18), the locking slide (18) being enclosed between the central housing part (2) and the corresponding outer housing part (1).

10. A bicycle lock according to any one of the preceding claims, characterized in that the means (10) for operating the catch (9) by means of a key (11) are adapted to be operated by means of a key (11), duplicates of which are made using data recorded on an identification object.

11. A rear fork of a bicycle, comprising two legs (1), characterized in that the legs (1) each comprise a U-shaped, outward bent portion (16), open sides of said portions (16) facing each other, said portions (16) being disposed opposite each other, enclosing sections of a common ring form with a substantially uniform clearance and forming outer housing parts (2) for a bicycle lock according to one of the preceding claims.

12. A rear fork according to claim 11 ,
characterized by mounting holes (23) provided in pairs and in alignment with each other in the free ribs of the portion that is U-shaped in cross-section.

13. A rear fork according to claim 11 or 12,
characterized by a passage (25) for a key (11) provided in the portion that is U-shaped in cross-section.

14. A rear fork according to any one of claims 11-13,
characterized by a passage (27) for a plug provided in the portion that is U-shaped in cross-section.

## Patentansprüche

1. Fahrradringschloss mit einem ringsegmentförmigen Bolzen (3) und einem Gehäuse, das Bereiche (1) besitzt, die sich an gegenüberliegenden Seiten eines Zwischenraums zur Umkleidung des Bolzens (3) erstrecken, wobei das Gehäuse mit einem Sperrorgan (9) zum Blockieren des Bolzens (3) versehen ist sowie mit Mitteln (10) zur Betätigung des Sperrorgans (9) mittels eines Schlüssels (11), dadurch gekennzeichnet, daß das Gehäuse ein zentrales Gehäuseteil (2) und äußere Gehäuseteile (1) mit U-förmigem Querschnitt aufweist, deren offene Seiten einander zugewandt sind, daß das Sperrorgan (9) und die Mittel (10) zur Betätigung des Sperrorgans (9) mittels eines Schlüssels (11) im zentralen Gehäuseteil (2) montiert sind, daß die äußeren Gehäuseteile (1) jeweils einen Schenkel einer hinteren Fahrradgabel bilden, und daß das zentrale Gehäuseteil (2) zwischen den äußeren Gehäuseteilen (1) verriegelt ist.

2. Fahrradschloss nach Anspruch 1, dadurch gekennzeichnet, daß die äußeren Gehäuseteile (1) jeweils einen von den gegenüberliegend angeordneten äußeren Gehäuseteilen (1) nach außen weggebogenen Bereich (16) aufweisen, wobei die nach außen gebogenen Bereiche (16) einander gegenüberliegend angeordnet sind und eine Erweiterung des Zwischenraums zwischen den beiden äußeren Gehäuseteilen (1) bilden, in denen das zentrale Gehäuseteil (2) verriegelt.

3. Fahrradschloss nach Anspruch 2, dadurch gekennzeichnet, daß die nach außen gebogenen Bereiche (16) so ausgebildet sind, daß sie teilweise die durch den Bolzen (3) definierte Ringform mit einem im wesentlichen konstanten Abstand umschließen.

4. Fahrradschloss nach einem der vorhergehenden Ansprüche, dadurch gekennzeichnet, daß das mittlere Gehäuseteil (2) mit einem Loch (17) versehen ist, dessen freie Öffnung mittels eines Sperrschiebers (18) verringert werden kann, wobei der Bolzen (3) in der geschlossenen Position den Schieber (18) in einer Position verriegelt, in der die freie Öffnung verringert ist.

5. Fahrradschloss nach Anspruch 4, dadurch gekennzeichnet, daß der Sperrschieber (18) in der nicht verriegelten Position in eine Ausnehmung (19) im Bolzen (3) verschiebbar und mittels einer Federkraft in einer Position gehalten wird, in der er die freie Öffnung verringert.

6. Fahrradschloss nach einem der vorhergehenden Ansprüche, dadurch gekennzeichnet, daß das mittlere Gehäuseteil (2) mit den äußeren Gehäuseteilen (1) mittels Nieten (23) verbunden ist.

7. Fahrradschloss nach einem der vorhergehenden Ansprüche, dadurch gekennzeichnet, daß das mittlere Gehäuseteil (2) einen Bereich mit einer sich nach innen erstreckenden Rippe (24) aufweist, wobei sich dieser Bereich entlang der Innenseite des Bolzens (3) erstreckt und einen Teil der Umkleidung des Bolzens (3) bildet.

8. Fahrradschloss nach einem der vorhergehenden Ansprüche, dadurch gekennzeichnet, daß in der Außenseite eines der äußeren Gehäuseteile (1) ein Durchgang (25) vorgesehen ist, hinter dem die Mittel (10) zur Betätigung des Sperrorgans (9) mittels eines Schlüssels (11) angeordnet sind.

9. Fahrradschloss nach einem der vorhergehenden Ansprüche, dadurch gekennzeichnet, daß in der Außenseite eines der äußeren Gehäuseteile (1) ein Durchgang (27) vorgesehen ist, hinter dem das Loch (17) angeordnet ist, dessen freie Öffnung mittels des Sperrschiebers (18) reduzierbar ist, wobei der Sperrschieber (18) zwischen dem zentralen Gehäuseteil (2) und dem entsprechenden äußeren Gehäuseteil (11) eingeschlossen ist.

10. Fahrradschloss nach einem der vorhergehenden Ansprüche, dadurch gekennzeichnet, daß die Mittel zur Betätigung des Sperrorgans (9) mittels eines Schlüssels (11) zur Betätigung mittels eines Schlüssels (11) ausgebildet sind, von dem Duplikate unter Verwendung von Daten hergestellt werden, die auf einem Identifikationsobjekt aufgezeichnet sind.

11. Hintere Fahrradgabel mit zwei Schenkeln (1), dadurch gekennzeichnet, daß die Schenkel (1) jeweils einen U-förmigen, nach außen gebogenen Bereich (16) aufweisen, wobei offene Seiten dieser Bereiche (16) einander gegenüberliegen und wobei diese einander gegenüberliegend angeordneten Bereiche (16) Sektionen einer gemeinsamen Ringform mit einem im wesentlichen gleichen Abstand umschließen und äußere Gehäuseteile (2) für ein Fahrradschloss nach einem der vorhergehenden Ansprüche bilden.

12. Hintere Gabel nach Anspruch 11, dadurch gekennzeichnet, daß Montagelöcher (23) paarweise und in Ausrichtung zueinander in den freien Rippen des im Querschnitt U-förmigen Bereichs vorgesehen sind.

13. Hintere Gabel nach Anspruch 11 oder 12, dadurch gekennzeichnet, daß ein Durchgang (25) für einen Schlüssel (11) in dem im Querschnitt U-förmigen Bereich vorgesehen ist.

14. Hintere Gabel nach einem der Ansprüche 11 bis 13, dadurch gekennzeichnet, daß ein Durchgang (27) für ein Steckelement in dem im Querschnitt U-förmigen Bereich vorgesehen ist.

## Revendications

1. Etrier anti-vol de bicyclette comprenant un pêne (3) configuré en segment annulaire et un boîtier comprenant des parties (1) s'étendant sur des côtés opposés d'un espace intermédiaire pour enfermer le pêne (3), le boîtier étant équipé d'un loquet (9) pour bloquer le pêne (3) et d'un moyen d'actionnement (10) du loquet (9) agissant par l'intermé- diaire d'une clef (11), caractérisé en ce que le boîtier comprend une partie centrale (2) de boîtier, et des parties extérieures (1) de boîtier qui sont configurées en U en section transversale et dont les côtés ouverts sont tournés l'un vers l'autre, ledit loquet (9) et lesdits moyens (10) d'actionnement du loquet (9) agissant à l'aide d'une clef (11) étant montés dans la partie centrale (2) de boîtier, les parties extérieures (1) de boîtier formant chacun une branche d'une fourche arrière de bicyclette et la partie centrale (2) de boîtier étant verrouillée entre les parties extérieures (1) de boîtier.

2. Etrier anti-vol de bicyclette selon la revendication 1, caractérisé en ce que les parties extérieures (1) de boîtier comprennent chacune une partie (16) cintrée vers l'extérieur en s'éloignant de la partie extérieure opposée de boîtier, lesdites parties (16) cintrées vers l'extérieur étant disposées en opposition l'une à l'autre et formant entre les deux parties extérieures (1) de boîtier un élargissement de l'espace dans lequel la partie centrale (2) de boîtier est verrouillée.

3. Etrier anti-vol de bicyclette selon la revendication 2, caractérisé en ce que les parties (16) cintrées vers l'extérieur sont formées d'une manière telle qu'elles entourent en partie la forme annulaire définie par le pêne (3) en laissant un jeu sensiblement constant.

4. Etrier anti-vol de bicyclette selon l'une quelconque des revendications précédentes, caractérisé en ce que la partie centrale (2) de boîtier comporte un perçage (17) dont l'ouverture libre peut être réduite à l'aide d'un coulisseau de verrouillage (18), le pêne (3) verrouillant, dans sa position fermée, le coulisseau (18) dans une position où il réduit l'ouverture libre.

5. Etrier anti-vol de bicyclette selon la revendication 4, caractérisé en ce que le coulisseau de verrouillage (18) peut, dans sa position déverrouillée, être déplacé dans un évidement (19) ménagé sur le pêne (3), et est retenu par une force élastique dans une position où il réduit l'ouver- ture libre.

6. Etrier anti-vol de bicyclette selon l'une quelconque des revendications précédentes, caractérisé en ce que la partie centrale (2) de boîtier est reliée aux parties extérieures (1) du boîtier à l'aide de rivets (23).

7. Etrier anti-vol de bicyclette selon l'une Quelconque des revendications précédentes, caractérisé en ce que la partie centrale (2) de boîtier comprend une partie comportant une nervure (24) s'étendant vers l'intérieur, ladite partie s'étendant le long du côté intérieur du pêne (3) formant une partie de l'élément enfermant le pêne (3).

8. Etrier anti-vol de bicyclette selon l'une quelconque des revendications précédentes, caractérisé en ce qu'un passage (25), derrière lequel sont disposés les moyens (10) d'actionnement du loquet (9) agissant à l'aide d'une clef, est ménagé dans le côté extérieur de l'une des parties extérieures (1) de boîtier.

9. Etrier anti-vol de bicyclette selon l'une quelconque des revendications précédentes, caractérisé en ce qu'un passage (27), derrière lequel est ménagé le perçage (17) dont l'ouverture libre peut être réduite au moyen d'un coulisseau de verrouillage (18), est ménagé dans le côté extérieur de l'une des parties extérieures (1) de boîtier, le coulisseau de verrouillage (18) étant enfermé entre la partie centrale (2) de boîtier et la partie extérieure correspondante (1) de boîtier.

10. Etrier anti-vol de bicyclette selon l'une quelconque des revendications précédentes, caractérisé en ce que les moyens (10) d'actionnement du loquet (9) agissant à l'aide d'une clef (11) sont adaptés à une action à l'aide d'une clef (11) dont des doubles sont fabriqués en utilisant des données enregistrées sur un objet d'identification.

11. Fourche arrière de bicyclette comprenant deux branches (1), caractérisée en ce que les branches (1) comprennent chacune une partie (16) cintrée vers l'extérieur configurée en U, les côtés ouverts desdites parties (16) étant tournées l'une vers l'autre, lesdites parties (16) étant disposées en opposition l'une à l'autre, en entourant des sections d'une forme annulaire commune tout en laissant un jeu sensiblement uniforme, et en formant des parties extérieures (1) de boîtier d'un étrier anti-vol de bicyclette selon l'une quelconque des revendications précédentes.

12. Fourche arrière selon la revendication 11, caractérisée par des trous de montage (23) ménagés par paires et alignés entre eux dans les nervures libres de la partie qui est configurée en U en section transversale.

13. Fourche arrière selon la revendication 11 ou 12, caractérisée par un passage (25) de clef (11) ménagé dans la partie qui est configurée en U en section transversale.

14. Fourche arrière selon l'une quelconque des revendications 11 à 13, caractérisée par un passage (27) de bouchon, ménagé dans la partie qui est configurée en U en section transversale.
